# FASCICULE DE BREVET EUROPEEN

(11) **EP 1 006 423 B1**
(45) Date de publication et mention de la délivrance du brevet: **28.01.2004**
(21) Numéro de dépôt: 99402986.6
(22) Date de dépôt: 29.11.1999
(51) Int. Cl.: G05B 19/05

(54) **Système d'automatisme redondant**
Redundantes Automatisierungssystem
Redundant automation system

(30) Priorité: 04.12.1998 FR 9815385
(43) Date de publication de la demande: 07.06.2000
(73) Titulaire: Schneider Automation, 06560 Valbonne (FR)
(72) Inventeur: Lelaure, Eric, 38640 Claix (FR); Meriaux, Michel, 38760 Varces (FR)

(56) Documents cités:
- EP-A- 0 754 991
- EP-A- 0 788 039
- DE-A- 19 548 445

## Description

La présente invention se rapporte à un système d'automatisme redondant comprenant un ensemble d'automates de redondance constitué par un couple d'automates équipés chacun de deux coupleurs de communication, le premier coupleur du premier automate étant connecté au premier coupleur du second automate par l'intermédiaire d'un premier réseau Ethernet, le second coupleur du premier automate étant connecté au second coupleur du second automate par un second réseau Ethernet les reliant à au moins un équipement distant.

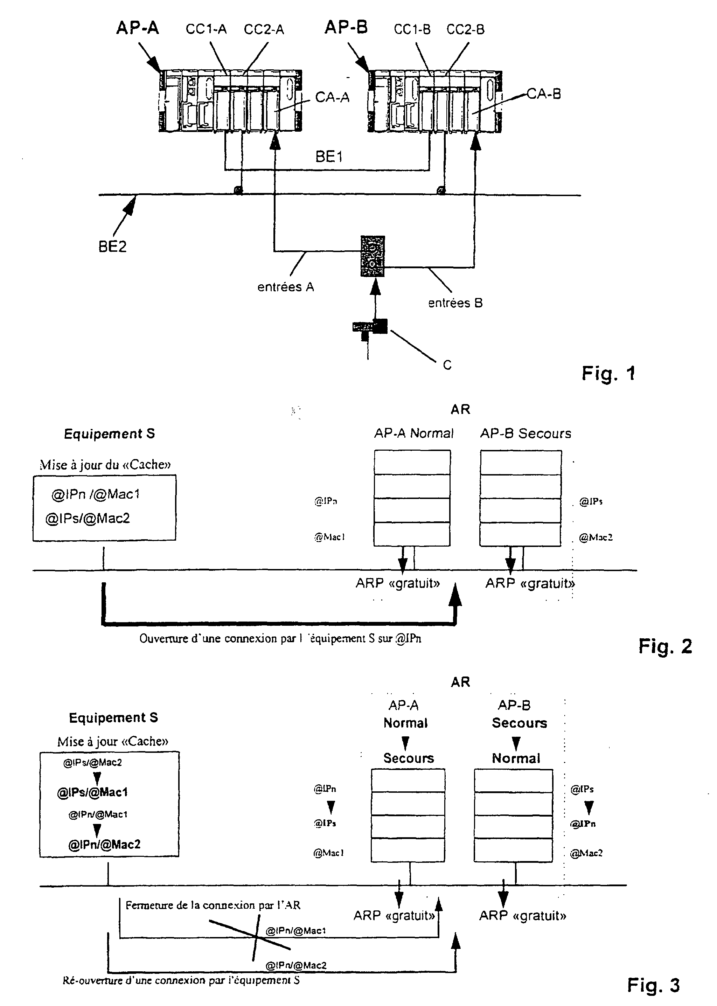

Il est nécessaire pour assurer la disponibilité de fonctionnement de certains process, d'utiliser un système d'automatisme redondant constitué par deux automates conventionnels. En se référant à la figure 1, chaque automate programmable AP-A ou AP-B comprend deux coupleurs de communication CC1-A ou CC1-B et CC2-A ou CC2-B. Les deux coupleurs CC1-A et CC1-B sont reliés l'un à l'autre par un réseau BE1 de type ETHERNET de manière à assurer la cohérence des traitements respectifs. Les deux autres coupleurs CC2-A et CC2-B sont connectés à un autre réseau BE2 de type ETHERNET et permettent la communication du système d'automatisme redondant avec des équipements tiers. Ces automates AP-A et AP-B reçoivent chacun les signaux provenant de capteurs C, sur les voies d'entrées de coupleurs CA-A et CA-B ou envoient des signaux de commande aux organes de commande de l'installation automatisée.

La présente invention a pour but de fournir un système d'automatisme redondant fonctionnant sous le protocole TCP/IP. L'accès au système redondant s'effectue au travers d'une adresse IP unique, le système étant vu comme un automate singulier. Il n'y a pas de modification spécifique des applications qui s'exécutent sur les équipements tiers. La commutation entre automates au sein du système redondant lorsqu'elle se produit à la suite d'un problème de fonctionnement, s'effectue très rapidement et l'absence de communication avec les équipements tiers est donc réduite au minimum, voire imperceptible.

Le système d'automatisme selon l'invention est caractérisé par le fait que chacun des automates a une adresse matérielle et une adresse IP, l'ensemble d'automates à redondance étant accessible de l'extérieur par une seule adresse IP affectée à un premier automate dit « normal » et qu'un mécanisme de commutation affecte l'adresse liée au fonctionnement normal sur le second automate, l'adresse IP du fonctionnement de secours étant affectée au premier automate.

Selon une caractéristique, chaque équipement distant dialoguant avec l'ensemble d'automates comporte dans une mémoire cache et pour chacun des automates un couple formé par l'adresse IP et l'adresse matérielle.

Selon une caractéristique, pendant la commutation il y a fermeture des connexions en cours avec le couple d'adresses et réouverture des connexions avec le nouveau couple d'adresses.

Selon une autre caractéristique, chaque coupleur émet périodiquement une requête "ARP gratuit" sur le réseau qui permet à tout équipement distant connecté sur le réseau de prendre en compte tout changement dans le couple d'adresse IP/adresse matérielle dû à une commutation du système.

L'invention va maintenant être décrite avec plus de détail en se référant à un mode de réalisation donné à titre d'exemple et illustré par les dessins annexés sur lesquels:
- la figure 1 est un schéma d'automatisme programmable de sûreté selon l'invention;
- la figure 2 est un schéma du mécanisme de communication entre les équipements tiers et les automates du système redondant.
- la figure 3 est un schéma du mécanisme de commutation entre les automates du système redondant.

L'ensemble d'automates à redondance repéré AR dans son ensemble est constitué de deux automates AP-A et AP-B strictement identiques. Chaque automate programmable AP-A ou AP-B possède deux coupleurs de communication CC1-A ou CC1-B et CC2-A ou CC2-B. Les 2 coupleurs CC2-A et CC2-B sont branchés sur le bus BE2 de type Ethernet de manière à permettre la communication sous protocole TCP/IP avec un appareil distant S lui aussi connecté au réseau Ethernet. Cet appareil distant S peut être un superviseur ou un autre coupleur de communication. Le nombre d'appareils distants qui sont couplés aux coupleurs CC2-A et CC2-B n'est pas limité.

Les signaux d'entrée sont envoyés sur les coupleurs analogiques CA-A ou CA-B respectivement dans lesquels ils subissent un échantillonnage physique ayant pour but de les numériser et un échantillonnage automate correspondant au rythme de traitement de l'application client.

Tout équipement connecté au réseau Ethernet TCP/IP BE2 tel qu'un coupleur de communication CC2-A ou CC2-B ou un équipement tiers tel que S possède une adresse dite adresse « MAC » qui est unique et sert à identifier physiquement ou matériellement cet équipement sur le réseau. Elle est exploitée par la couche physique du protocole de communication. Une autre adresse dite adresse IP est attribuée indépendamment de l'adresse matérielle « MAC » et identifie de façon unique l'application qui s'exécute sur l'équipement au sens physique du terme. Cette adresse IP est exploitée par les couches TCP/IP du protocole de communication. Les applications qui dialoguent entre elles utilisent uniquement les adresses IP et le logiciel réseau doit convertir toute adresse IP en une adresse physique ou matérielle « MAC ».

Chacun de ces coupleurs implémente une pile de protocole TCP/IP fournie par le système d'exploitation temps réel de ce coupleur.

Pour chaque équipement, il faut faire le lien entre l'adresse IP et l'adresse « MAC » et c'est un protocole appelé ARP ("Address Resolution Protocol") qui s'en charge. Ce protocole tient à jour une table de correspondance entre l'adresse IP et l'adresse « MAC ». Un équipement utilise le protocole ARP pour déterminer l'adresse physique en diffusant une requête de reconnaissance ARP qui contient l'adresse IP à traduire. L'équipement possédant l'adresse IP concernée répond en renvoyant son adresse physique. Ce protocole est stocké dans une mémoire cache de l'équipement.

Si un équipement ne connaît pas l'adresse « MAC » de l'équipement distant avec laquelle il veut dialoguer, il envoie au préalable sur le réseau une requête de reconnaissance ARP de l'adresse « MAC » en question. Cette requête permet de mettre à jour le protocole ARP de l'équipement et de faire le lien entre l'adresse IP et l'adresse « MAC ». La requête de reconnaissance des adresses « MAC » étant diffusée sur le réseau, le cache ARP de tout équipement connecté sur le réseau est également mis à jour.

D'autre part, toute application qui s'exécute sur un équipement donné, a la possibilité d'informer l'ensemble des équipements connectés sur le réseau de la valeur de son couple d'adresses (@MAC/@IP). Cette information se fait par diffusion d'une trame "ARP gratuit" sur le réseau. Cette diffusion permet la mise à jour automatique des caches ARP de tous les équipements connectés.

Chacun des automates AP-A ou AP-B peut prendre un état de fonctionnement dit «normal » ou un état dit de « secours ». Dans l'état « normal », l'automate AP-A par exemple pilote le process et communique avec les équipements distants. Dans ce cas l'autre» automate AP-B est en état de « secours et prêt, en cas de problème, à prendre le relais de l'automate « normal » associé AP-A. Les deux automates AP-A et AP-B ne se trouvent jamais simultanément dans le même état de fonctionnement. Un mécanisme d'élection permet de déterminer l'automate qui a le rôle de « normal », le second automate associé au sein du système prenant alors l'état « secours ». Ce passage à l'état « normal » d'un automate à l'autre s'appelle une "commutation" du système redondant.

L'ensemble d'automates redondants est vu par tout équipement extérieur comme un automate unique et il est donc connu et accessible par les applications qui s'exécutent sur les équipements distants, en utilisant une adresse IP unique notée @IPn.

Si l'on se réfère à la figure 2, l'automate AP-A qui est en état « normal » a une adresse matérielle @MAC1 et une adresse IP notée @IPn. L'automate AP-B qui est en état « secours » a une adresse matérielle @MAC2 et une adresse IP notée @IPs.

Lors d'une connexion TCP/IP établie entre un équipement distant S et l'automate redondant AR, le cache ARP de l'équipement distant S contient le couple adresse @IPn et l'adresse @MAC1.

A la suite d'une commutation, le coupleur CC2-B de l'automate AP- B dont l'adresse matérielle est @MAC2 prend alors l'adresse IP @IPn en accédant à l'état « Normal ». Le coupleur CC2-A de l'automate API-A dont l'adresse matérielle est @MAC1 prend alors l'adresse IP notée @IPs pour autant que la défaillance le permette.

A la suite de cette commutation, l'automate « Normal est l'automate AP-B dont l'adresse matérielle est @MAC2 et l'adresse IP est @IPn. L'automate de « Secours » est l'automate AP-A dont l'adresse matérielle est @MAC2 et l'adresse IP est @IPs. L'équipement distant S qui communique avec le système d'automate redondant dialogue avec le nouveau couple @IPn/@MAC2.

Pendant la commutation il y a fermeture des connexions en cours avec le couple @IPn/MAC1 et réouverture des connexions avec le nouveau couple @IPn/@MAC2. Ces deux opérations sont réalisées rapidement et sans aucune modification de l'application qui s'exécute sur l'équipement distant.

Le fonctionnement du système va maintenant être expliqué en se référant aux figures 2 et 3:
A l'état initial (figure 2), l'automate « normal » est AP-A qui a les adresses @IPn/@MAC1 et l'automate de « secours » AP-B a les adresses @IPs/@MAG2.
Après commutation, à l'état final, l'automate « normal » est AP-B qui a les adresses @IPn/@MAC2, l'automate de « secours » étant AP-A avec les adresses @IPs/@MAC1. Le couple @IPn/@MAC1 a donc été remplacé instantanément par le couple @IPn/@MAC2 dans le cache ARP de l'équipement distant S.
L'envoi de la requête "ARP gratuit" par l'automate AP- B devenu « normal » lui permet d'informer l'ensemble des équipements connectés sur le réseau du nouveau couple d'adresses @IPn/@MAC2.
Sur nouvelle demande de connexion d'une application distante déjà connectée, il y a destruction de la connexion précédente.
La périodicité de l'émission de la requête ARP permet de s'affranchir de tous les cas de commutation combinés à un problème de communication sur le réseau (exemple: rupture du câble).

## Revendications

1. Système d'automatisme redondant comprenant un ensemble d'automates de redondance (AR) constitué par un couple d'automates (AP-A, AP-B) équipés chacun de deux coupleurs de communication (CC1-A, CC2-A et CC1-B, CC2-B), le premier coupleur (CC1-A) du premier automate étant connecté au premier coupleur (CC1-B) du second automate par l'intermédiaire d'un premier réseau Ethernet (BE1), le second coupleur (CC2-A) du premier automate étant connecté au second coupleur (CC2-B) du second automate par un second réseau Ethernet (BE2) les reliant à au moins un équipement distant (S), **caractérisé par le fait que** chacun des automates (AP-A, AP-B) a une adresse matérielle (MAC1, MAC2) et une adresse IP (IPn, IPs), l'ensemble d'automates à redondance étant accessible de l'extérieur par une seule adresse IP (IPn) affectée à un premier automate dit « normal » (AP-A) et qu'un mécanisme de commutation affecte l'adresse (IPn) liée au fonctionnement normal sur le second automate (IP-B), l'adresse IP (IPs) du fonctionnement de secours étant affectée au premier automate.

2. Système selon la revendication 1, **caractérisé par le fait que** chaque équipement distant (S) dialoguant avec l'ensemble d'automates (AP) comporte dans une mémoire cache (ARP) et pour chacun des automates (AP-A, AP-B) un couple formé par l'adresse IP (@IPn) et l'adresse matérielle (@MAC1).

3. Système selon l'une quelconque des revendications précédentes, **caractérisé par le fait que** pendant la commutation il y a fermeture des connexions en cours avec le couple d'adresses (@IPn/MAC1) et réouverture des connexions avec le nouveau couple d'adresses (@IPn/@MAC2).

4. Système selon l'une quelconque des revendications précédentes, **caractérisé par le fait que** chaque coupleur (CC2-A et CC2-B) émet périodiquement une requête "ARP gratuit" sur le réseau qui permet à tout équipement distant (S) connecté sur le réseau de prendre en compte tout changement dans le couple d'adresse IP/adresse matérielle dû à une commutation du système.

## Patentansprüche

1. Redundant ausgelegtes Automatisierungssystem mit einer Anordnung aus redundierten Steuergeräten (RS), welche Anordnung aus paarweise kombinierten Steuerungen (SPS-A, SPS-B) mit je zwei Kommunikationskopplern (KK1-A, KK2-A und KK1-B, KK2-B) besteht, wobei der erste Koppler (CC1-A) der ersten Steuerung mit dem ersten Koppler (KK1-B) der zweiten Steuerung über einen ersten Ethernet-Bus (EB1) und der zweite Koppler (KK2-A) der ersten Steuerung mit dem zweiten Koppler (KK2-B) der zweiten Steuerung über einen zweiten Ethernet-Bus (EB2) verbunden ist, das die Steuerungen mit mindestens einem dezentral installierten Gerät (S) verbindet, **dadurch gekennzeichnet, daß** jede der Steuerungen (SPS-A, SPS-B) eine Hardwareadresse (MAC1, MAC2) und eine IP-Adresse (IPn, IPs) besitzt, wobei die Anordnung aus den redundierten Steuergeräten von außen über eine einzige IP-Adresse (IPn) angesprochen werden kann, die einer ersten sogenannten "Normal"-Steuerung (SPS-A) zugeordnet ist, und daß ein Umschaltmechanismus die dem Normalbetrieb zugeordnete Adresse (IPn) auf die zweite Steuerung (SPS-B) schaltet und gleichzeitig die IP-Adresse (IPs) für den Ersatzbetrieb der ersten Steuerung zugewiesen wird.

2. System nach Anspruch 1, **dadurch gekennzeichnet, daß** jedes dezentral installierte Gerät (S), das mit den Steuerungen (SPS) kommuniziert, in einem Cachespeicher (ARP) für jede der Steuerungen (SPS-A, SPS-B) ein Adreßpaar enthält, das sich aus der IP-Adresse (@IPn) und der Hardwareadresse (@MAC1) zusammensetzt.

3. System nach irgendeinem der vorhergehenden Ansprüche, **dadurch gekennzeichnet, daß** während der Kommunikation die bestehenden Verbindungen mit dem Adreßpaar (@IPn/MAC1) geschlossen und die Verbindungen mit dem neuen Adreßpaar (@IPn/@MAC2) wieder geöffnet werden.

4. System nach irgendeinem der vorhergehenden Ansprüche, **dadurch gekennzeichnet, daß** jeder Koppler (KK2-A und KK2-B) periodisch eine "Selbstauskunft-ARP"-Anfrage über das Netz sendet, die es allen an das Netz angeschlossenen dezentral installierten Geräten (S) ermöglicht, jede durch eine Umschaltung des System bewirkte Änderung des Adreßpaars aus IP- und Hardwareadresse zu registrieren.

## Claims

1. Redundant automation system comprising a set of redundant PLCs (AR) consisting of a pair of PLCs (AP-A, AP-B) each equipped with two communication couplers (CC1-A, CC2-A and CC1-B, CC2-B), the first coupler (CC1-A) in the first PLC being connected to the first coupler (CC1-B) in the second PLC through a first Ethernet network (BE1), the second coupler (CC2-A) in the first PLC being connected to the second coupler (CC2-B) in the second PLC through a second Ethernet network (BE2), connecting them to at least one remote equipment (S), **characterized by** the fact that each of the PLCs (AP-A and AP-B) has a hardware address (MAC1, MAC2) and an IP address (IPn, IPs), the set of redundant PLCs being accessible from outside by a single IP address (IPn) assigned to a first "normal" PLC (AP-A) and that a switching mechanism assigns the address (IPn) related to normal operation to the second PLC (IP-B), the IP address (IPs) of the standby operation being assigned to the first PLC.

2. System according to claim 1, **characterized by** the fact that each remote equipment (S) in dialog with the set of PLCs (AP) comprises a pair in its cache memory (ARP) for each PLC (AP-A, AP-B) formed by the IP address (@IPn) and the hardware address (@MAC1).

3. System according to either of the previous claims, **characterized by** the fact that during switching the current connections with the pair of addresses (@IPn/@MAC1) are closed, and the connections are reopened with the new address pair (@IPn/@MAC2).

4. System according to any one of the previous claims, **characterized by** the fact that each coupler (CC2-A and CC2-B) periodically sends a "free ARP" request on the network that is used by any remote.
